# EUROPÄISCHE PATENTSCHRIFT

(11) **EP 2 569 189 B1**
(45) Veröffentlichungstag und Bekanntmachung des Hinweises auf die Patenterteilung: **02.11.2016**
(21) Anmeldenummer: 11724987.0
(22) Anmeldetag: 10.05.2011
(51) Int. Cl.: B60S 1/02, B60S 1/04, H05B 3/84, H05B 3/86, B32B 17/10

(54) **TRANSPARENTE SCHEIBE MIT HEIZBARER BESCHICHTUNG, SOWIE HERSTELLUNGSVERFAHREN HIERFÜR**
TRANSPARENT PANE WITH HEATABLE COATING AND PROCESS FOR ITS MANUFACTURE
VITRAGE TRANSPARENT MUNI D'UN REVÊTEMENT CHAUFFABLE ET PROCÉDÉ POUR SA FABRICATION

(30) Priorität: 10.05.2010 EP 10162471
(43) Veröffentlichungstag der Anmeldung: 20.03.2013
(73) Patentinhaber: Saint-Gobain Glass France, 92400 Courbevoie (FR)
(72) Erfinder: LISINSKI, Susanne, 50739 Köln (DE); SCHALL, Günther, 52372 Kreuzau (DE); PHAN, Dang Cuong, 52062 Aachen (DE); REUL, Bernhard, 52134 Herzogenrath (DE); VORTMEIER, Gunther, 72631 Aichtal (DE)
(74) Vertreter: Gebauer, Dieter Edmund
(86) Internationale Anmeldenummer: PCT/EP2011/057565
(87) Internationale Veröffentlichungsnummer: WO 2011/141487

(56) Entgegenhaltungen:
- EP-A2- 0 524 537
- DE-A1- 10 160 806
- DE-A1-102007 008 833
- US-A1- 2004 084 432

## Beschreibung

Die Erfindung betrifft nach ihrer Gattung eine transparente Scheibe mit einer elektrisch heizbaren Beschichtung, sowie ein Verfahren zu deren Herstellung.

Scheiben mit einer transparenten, elektrisch heizbaren Beschichtung sind als solche wohlbekannt und bereits vielfach in der Patentliteratur beschrieben worden. Lediglich beispielhaft sei diesbezüglich auf die deutschen Offenlegungsschriften DE 10200705286, DE 102008018147 A1 und DE 102008029986 A1 verwiesen.

In Kraftfahrzeugen werden sie häufig als Windschutzscheiben eingesetzt, da das zentrale Sichtfeld ("Sichtfeld A") von Windschutzscheiben im Unterschied zu Heckscheiben aufgrund gesetzlicher Vorgaben keinerlei Sichteinschränkungen aufweisen darf. Durch die von der heizbaren Beschichtung erzeugte Wärme können auch im zentralen Sichtfeld binnen kurzer Zeit kondensierte Feuchtigkeit, Eis und Schnee entfernt werden.

Transparente Scheiben mit einer elektrisch heizbaren Beschichtung sind in der Regel als Verbundscheiben ausgebildet, in denen zwei Einzelscheiben beispielsweise durch eine thermoplastische Klebeschicht miteinander verbunden sind. Die heizbare Beschichtung ist beispielsweise auf der an der thermoplastischen Klebeschicht anliegenden Oberfläche einer der beiden Einzelscheiben angeordnet. Es sind aber auch andere Aufbauten bekannt, bei denen die heizbare Beschichtung beispielsweise auf eine Trägerfolie aufgebracht wird, die dann ihrerseits mit den beiden Einzelscheiben verklebt wird. Die heizbare Beschichtung, die beispielsweise aus Metall oder Metalloxid besteht, kann als Einzelschicht ausgebildet oder aus einer Schichtenfolge, die zumindest eine solche Einzelschicht umfasst, zusammengesetzt sein.

Der Heizstrom wird in der Regel durch mindestens ein Paar streifen- bzw. bandförmiger Elektroden ("bus bars") in die heizbare Beschichtung eingeleitet. Diese sollen als Sammelleiter den Heizstrom möglichst gleichmäßig in die Beschichtung einleiten und auf breiter Front verteilen. Da die bandförmigen Sammelleiter undurchsichtig sind, werden sie typischer Weise durch opake Maskierungsstreifen überdeckt. Diese bestehen gewöhnlich aus einem nicht leitfähigen, schwarz eingefärbten, einbrennbaren Material, das beispielsweise als Siebdruckpaste mithilfe eines Siebdruckverfahrens auf die Scheibe aufgebracht wird.

Der elektrische Flächenwiderstand der heizbaren Beschichtung ist bei den zurzeit in der industriellen Serienfertigung eingesetzten Materialien relativ hoch und kann in der Größenordnung von einigen Ohm pro Flächeneinheit liegen. Um dennoch eine ausreichende Heizleistung zu erzielen, sollte die Heizspannung entsprechend hoch sein, wobei aber beispielsweise in Kraftfahrzeugen standardmäßig nur eine Bordspannung von 12 bis 24 Volt zur Verfügung steht.

Grundsätzlich kann die Schichtdicke der heizbaren Beschichtung erhöht werden, um dadurch den Flächenwiderstand abzusenken, was aber immer mit einer Verringerung der optischen Transmission der Scheibe einhergeht und somit auch aufgrund gesetzlicher Vorgaben nur eingeschränkt möglich ist. Da der Flächenwiderstand mit der Länge der Strompfade zunimmt, sollten die Sammelleiter gegensätzlicher Polarität einen möglichst geringen Abstand voneinander haben, um auf diese Weise eine möglichst große Heizleistung zu bewirken.

Bei Fahrzeugscheiben, die gewöhnlich breiter als hoch sind, sind die Sammelleiter deshalb typischer Weise entlang der längeren Seiten der Scheibe (in Einbaulage oben und unten) angeordnet, so dass der Heizstrom über den kürzeren Weg der Scheibenhöhe fließen kann. Zudem werden sie möglichst nahe an den einander zugewandten Rändern der Maskierungsstreifen angeordnet. Diese Gestaltung hat jedoch zur Folge, dass im Bereich einer Ruhe- oder Parkstellung von zum Wischen der Scheibe vorgesehenen Scheibenwischern meist keine ausreichende Heizleistung vorliegt, so dass die Scheibenwischer festfrieren können.

Eine Lösung dieses Problems ist im europäischen Patent EP 1454509 B1 vorgeschlagen. In der dort gezeigten transparenten Scheibe wird durch zwei Stromsammelschienen ein heizbares Sichtfeld eingeschlossen, wobei das Sichtfeld durch eine der beiden Stromsammelschienen und insbesondere durch einen entschichteten Bereich von einem Zusatzheizbereich abgeteilt wird. Im Zusatzheizbereich sind weitere Stromsammelschienen gegensätzlicher Polarität vorgesehen, um die Scheibe im maskierten Bereich unterhalb des Sichtfelds zu heizen.

Die deutsche Patentanmeldung DE 10 2007 008833 A1 zeigt eine Scheibe mit einer heizbaren Beschichtung und einem beschichtungsfreien Bereich der durch eine Drahtheizung beheizbar ist. Der beschichtungsfreie Bereich ist nicht in galvanisch getrennte Bereiche unterteilt.

Die deutsche Patentanmeldung DE 101 60 806 A1 zeigt eine Scheibe, bei der ein beheizbarer Bereich am Unterrand einer Windschutzscheibe in mehrere Segmente unterteilt ist.

Demgegenüber besteht die Aufgabe der vorliegenden Erfindung darin, transparente Scheiben mit elektrisch heizbarer Beschichtung in vorteilhafter Weise weiterzubilden, wobei insbesondere die Heizleistung im Bereich einer Ruhe- oder Parkstellung von Scheibenwischern weiter verbessert werden soll. Diese und weitere Aufgaben werden nach dem Vorschlag der Erfindung durch eine transparente Scheibe mit heizbarer Beschichtung mit den Merkmalen des unabhängigen Patentanspruchs gelöst. Vorteilhafte Ausgestaltungen der Erfindung sind durch die Merkmale der Unteransprüche angegeben.

Die transparente Scheibe umfasst eine elektrisch heizbare, transparente Beschichtung, die sich zumindest über einen wesentlichen Teil der Scheibenfläche, insbesondere über deren zentrales Sichtfeld, erstreckt. Die heizbare Beschichtung ist durch zumindest eine beschichtungsfreie Zone in zumindest zwei voneinander getrennte Beschichtungszonen, nämlich eine erste Beschichtungszone und eine zweite Beschichtungszone, unterteilt. Die beiden Beschichtungszonen sind durch die beschichtungsfreie Zone galvanisch voneinander getrennt.

Weiterhin sind die Beschichtungszonen jeweils mit mindestens zwei Sammelleitern elektrisch so verbunden, dass nach Anlegen einer Speisespannung, die von einer Spannungsquelle bereitgestellt wird, jeweils ein elektrischer Strom über mindestens ein von der ersten Beschichtungszone gebildetes erstes Heizfeld und mindestens ein von der zweiten Beschichtungszone gebildetes zweites Heizfeld fließt. Die an die beiden Beschichtungszonen angelegten Speisespannungen können gleich oder voneinander verschieden sein, wobei sie vorzugsweise gleich sind und von einer selben Spannungsquelle bereitgestellt werden.

Die Sammelleiter können beispielsweise als streifen- bzw. bandförmige Elektroden ausgebildet sein und verfügen im Vergleich zu der relativ hochohmigen elektrisch heizbaren Beschichtung über einen relativ niederohmigen elektrischen Widerstand. In der Regel verfügen die Sammelleiter über einen im Vergleich zur heizbaren Beschichtung vernachlässigbaren ohmschen Widerstand, so dass sie sich bei Beaufschlagung mit der Speisespannung nicht nennenswert aufheizen und somit zur Scheibenheizung praktisch keinen Beitrag leisten.

Nach dem Vorschlag der Erfindung ist in der beschichtungsfreien Zone mindestens ein Heizelement angeordnet, das einen solchen ohmschen Widerstand hat, dass durch Anlegen der Speisespannung an das Heizelement die Scheibe in einem die beschichtungsfreie Zone enthaltenden Flächenbereich heizbar ist. Die an das Heizelement angelegte Speisespannung kann zur Speisespannung der Beschichtungszonen gleich oder hiervon verschieden sein, wobei vorzugsweise eine gleiche Speisespannung an das Heizelement und die beiden Beschichtungszonen angelegt wird, die von einer selben Spannungsquelle bereitgestellt wird. Weiterhin ist das mindestens eine Heizelement so ausgebildet, dass durch Anlegen der Speisespannung an das Heizelement die Scheibe in zumindest einem an die beschichtungsfreie Zone angrenzenden Flächenbereich, der zumindest einen der Sammelleiter enthält, (im Wesentlichen) durch Wärmeleitung und (in einem sehr geringen Anteil) durch Wärmestrahlung mitheizbar ist. Dies kann insbesondere dadurch erreicht werden, dass die spezifische Heizleistung (Heizleistung pro Fläche, beispielsweise ausgedrückt in Watt/dm²) des mindestens einen Heizelements größer ist als die spezifische Heizleistung des Heizfelds mit dessen Beschichtungszone der im Flächenbereich enthaltene Sammelleiter elektrisch verbunden ist.

Durch diese Maßnahme kann in vorteilhafter Weise erreicht werden, dass nicht nur die beschichtungsfreie Zone geheizt wird sondern auch ein an die beschichtungsfreie Zone angrenzender Flächenbereich der Scheibe mit einem Sammelleiter, in dem keine nennenswerte Heizleistung durch die heizbare Beschichtung vorliegt, mitgeheizt wird. Beispielsweise ist die spezifische Heizleistung des mindestens einen Heizelements zu diesem Zweck um wenigstens 20%, insbesondere wenigstens 30% größer als die spezifische Heizleistung dieses Heizfelds, wobei der Unterschied in den spezifischen Heizleistungen andererseits nicht so groß sein soll, dass unerwünscht große thermische Spannungen in der Scheibe auftreten. In dieser Hinsicht kann es insbesondere vorteilhaft sein, wenn die spezifische Heizleistung in der beschichtungsfreien Zone maximal 8 Watt/dm² beträgt.

Vorteilhaft ist das wenigstens eine Heizelement so ausgebildet, dass im angrenzenden Flächenbereich der Scheibe, der den Sammelleiter aufweist, durch Heizen des Heizelements eine spezifische Heizleistung erreicht wird, die wenigstens der spezifischen Heizleistung des Heizfelds entspricht, mit dem der Sammelleiter elektrisch verbunden ist.

Weiterhin kann es im Hinblick auf eine gute Wärmeübertragung von der beschichtungsfreien Zone an den den Sammelleiter enthaltenden benachbarten Flächenbereich vorteilhaft sein, wenn ein Abstand zwischen dem mindestens einen Heizelement und dem im benachbarten Flächenbereich enthaltenen Sammelleiter möglichst gering ist und beispielsweise im Bereich von einigen Millimetern liegt und insbesondere maximal 1 Millimeter beträgt.

Bei einer speziellen Ausgestaltung der erfindungsgemäßen Scheibe als Fahrzeug-Windschutzscheibe umfasst sie zwei Beschichtungszonen, die durch eine beschichtungsfreie Zone galvanisch voneinander getrennt sind, wobei sich eine erste Beschichtungszone im Bereich des zentralen Sichtfelds der Scheibe und eine zweite Beschichtungszone im Bereich einer Ruhe- oder Parkstellung von Scheibenwischern befindet. Dabei sind sowohl die erste Beschichtungszone als auch die zweite Beschichtungszone jeweils mit zumindest zwei Sammelleitern (direkt) elektrisch verbunden, wodurch ein erstes Heizfeld im Bereich des zentralen Sichtfelds der Scheibe und ein zweites Heizfeld im Bereich der Ruhe- oder Parkstellung der Scheibenwischer gebildet wird. Beispielsweise können die Sammelleiter band- oder streifenförmig ausgebildet sein, wobei insbesondere das erste Heizfeld im zentralen Sichtfeld der Scheibe durch zwei voneinander beabstandete bandförmige Sammelleiter begrenzt sein kann. Im eingebauten Zustand verfügt die Fahrzeug-Windschutzscheibe somit typischer Weise über ein erstes (oberes) Heizfeld im Sichtfeld der Scheibe mit einem oberen und unteren Sammelleiter, durch welche das erste Heizfeld begrenzt wird, und ein zweites (unteres) Heizfeld im Bereich der Ruhe- oder Parkstellung der Scheibenwischer, die durch eine beschichtungsfreie Zone galvanisch voneinander getrennt sind. Durch das in der beschichtungsfreien Zone enthaltene wenigstens eine Heizelement kann die beschichtungsfreie Zone geheizt werden. Dabei wird ein Flächenbereich der Scheibe, der an die beschichtungsfreie Zone angrenzt und den unteren Sammelleiter des ersten Heizfelds enthält, durch das Heizelement im Wesentlichen auf Basis von Wärmeleitung mitgeheizt. Typischer Weise grenzt der untere Sammelleiter an die beschichtungsfreie Zone an.

Die erfindungsgemäße Scheibe weist somit eine Aufteilung der heizbaren Beschichtung in zumindest zwei voneinander getrennte Heizfelder durch eine beschichtungsfreie Zone auf, wobei ein die beschichtungsfreie Zone enthaltender Flächenbereich der Scheibe geheizt werden kann, und wobei ein hieran angrenzender Flächenbereich der Scheibe, der zwar über eine heizbare Beschichtung verfügt, jedoch nicht zum Heizfeld gehört, durch das Heizelement mitheizbar ist, um insbesondere eine Vereisung einer Fahrzeug-Windschutzscheibe in diesem Flächenbereich zuverlässig und sicher zu vermeiden.

In der industriellen Serienfertigung erfolgt eine Entfernung der heizbaren Beschichtung beispielsweise mechanisch mittels eines Schleifrads, wobei grundsätzlich auch ein Abtrag durch Einsatz eines Laserstrahls denkbar ist. Gewöhnlich geht eine mechanische Entschichtung mit einer strukturellen Schwächung bzw. Ausdünnung der Scheibe einher. Zudem sind die wärmeaufnehmenden Eigenschaften (IR-Absorption) von beschichteten und entschichteten Flächenbereichen unterschiedlich, so dass der Fall auftreten kann, dass sich die Geometrie der Scheibe in den entschichteten Flächenbereichen beim Biegen der Scheibe in unerwünschter Weise verändert und beispielsweise eine beulenartige Ausbuchtung entsteht. Aus diesen Gründen ist es allgemein wünschenswert, dass die zwischen den beiden angrenzenden Heizfeldern befindliche beschichtungsfreie Zone eine relative geringe Fläche einnimmt, beispielsweise ausgedrückt durch eine relative geringe Breite (Abmessung senkrecht zu ihrer Erstreckung) einer bandförmigen beschichtungsfreien Zone. Gleichwohl sind diesem Bemühen aus praktischen Erwägungen Grenzen gesetzt, da eine Entschichtung mit relativ geringen Taktzeiten eine gewisse Breite der Schleifräder erfordert und die Schleifräder überdies in der Regel in verschiedenen Bereichen der Scheibe eingesetzt werden, beispielsweise zum Entschichten von Kommunikationsfenstern. Aus diesem Grund werden die entschichteten Zonen in der Praxis mit einer gewissen Breite gefertigt, die eine dortige Vereisung der Scheibe ohne entsprechende Gegenmaßnahmen wahrscheinlich macht. Dies gilt umso mehr als es bei derartig gestalteten Fahrzeug-Windschutzscheiben vorteilhaft sein kann, wenn der untere Sammelleiter an die entschichtete Zone angrenzt, so dass der in herkömmlicher Weise nichtgeheizte Bereich der Scheibe tatsächlich um den an die entschichtete Zone angrenzenden, den unteren Sammelleiter aufweisenden Flächenbereich vergrößert ist. Erfindungsgemäß kann sowohl in der beschichtungsfreien Zone als auch in dem angrenzenden, den unteren Sammelleiter enthaltenden Flächenbereich eine Vereisung durch Beheizen des zumindest einen Heizelements zuverlässig und sicher vermieden werden.

Während die Sammelleiter wie oben bereits erwähnt aufgrund ihres geringen ohmschen Widerstands nur sehr wenig Wärme abgeben und keinen nennenswerten Beitrag zur Heizleistung liefern, verfügt das zumindest eine Heizelement über einen wesentlich höheren Widerstand als die Sammelleiter und ist so in der Lage, den die beschichtungsfreie Zone enthaltenden Flächenbereich der Scheibe zu heizen, wobei zumindest ein an die beschichtungsfreie Zone angrenzender Flächenbereich der Scheibe mit zumindest einem Sammelleiter im Wesentlichen durch Wärmeleitung mitgeheizt wird.

Vorzugsweise erstreckt sich das Heizelement dabei über einen wesentlichen Teil der beschichtungsfreien Zone, um auf diese Weise eine möglichst gleichmäßige und vollständige Heizung der beschichtungsfreien Zone und des einen Sammelleiter aufweisenden angrenzenden Flächenbereichs der Scheibe zu bewirken.

In der erfindungsgemäßen Scheibe ist jede Beschichtungszone mit zumindest zwei Sammelleitern elektrisch verbunden, wobei zwischen den beiden Sammelleitern einer selben Beschichtungszone ein Heizfeld gebildet wird und die Sammelleiter insbesondere die Heizfelder begrenzen. Die zur Verbindung mit einem selben Pol einer Spannungsquelle vorgesehenen Sammelleiter der zumindest zwei Beschichtungszonen können elektrisch getrennt oder elektrisch miteinander verbunden sein. Im zweitgenannten Fall können die zur Verbindung mit einem selben Pol einer Spannungsquelle vorgesehenen Sammelleiter der zumindest zwei Beschichtungszonen als Abschnitte eines einzigen Sammelleiters ausgebildet sein.

Grundsätzlich können die Beschichtungszonen und das zumindest eine Heizelement voneinander getrennte Außenanschlüsse haben und unabhängig voneinander elektrisch speisbar sein. Erfindungsgemäß bevorzugt ist jedoch eine gemeinsame Speisung der Beschichtungszonen und des Heizelements mit einer gleichen Speisespannung, die von einer selben Spannungsquelle zur Verfügung gestellt wird. Zu diesem Zweck ist es von Vorteil, wenn das Heizelement mit mindestens zwei Sammelleitern der Beschichtungszonen, die für eine elektrische Verbindung mit verschiedenen Polen der Spannungsquelle vorgesehen sind, elektrisch verbunden ist. Diese Maßnahme ermöglicht eine besonders einfache technische Realisierung der Scheibe, da das Heizelement nicht mit separaten Außenanschlüssen verbunden werden muss und beim Heizen zumindest eines Heizfelds stets auch mit der Speisespannung beaufschlagt und somit geheizt wird. In dieser Hinsicht ist es weiterhin von Vorteil, wenn die Sammelleiter der beiden Beschichtungszonen, welche jeweils für eine Verbindung mit einem selben Pol der Spannungsquelle vorgesehen sind, elektrisch verbunden sind, so dass nicht nur das Heizelement gemeinsam mit zumindest einem Heizfeld, sondern auch die wenigstens zwei Heizfelder gemeinsam geheizt werden können.

Bei einer weiteren vorteilhaften Ausgestaltung der erfindungsgemäßen transparenten Scheibe umfasst ein zur Verbindung mit dem einen Pol vorgesehener erster Sammelleiter einen mit der ersten Beschichtungszone verbundenen ersten Sammelleiterabschnitt und zumindest einen mit der zweiten Beschichtungszone verbundenen zweiten Sammelleiterabschnitt. Dabei erstreckt sich beispielsweise der zweite Sammelleiterabschnitt ausgehend vom ersten Sammelleiterabschnitt zumindest schräg, insbesondere senkrecht, zum ersten Sammelleiterabschnitt, wobei der zweite Sammelleiterabschnitt und der erste Sammelleiterabschnitt beispielsweise einen Winkel im Bereich zwischen 45° und 135° bilden können. Andererseits umfasst ein zur Verbindung mit dem anderen Pol vorgesehener zweiter Sammelleiter einen mit der ersten Beschichtungszone verbundenen dritten Sammelleiterabschnitt und zumindest einen mit der zweiten Beschichtungszone verbundenen vierten Sammelleiterabschnitt, der sich beispielsweise zum ersten Sammelleiterabschnitt hin erstreckt, ohne mit diesem elektrisch verbunden zu sein. Diese Maßnahme ermöglicht eine besonders einfache technische Realisierung der elektrischen Verbindung der Sammelleiter der beiden Beschichtungszonen.

Weiterhin kann es von Vorteil sein, wenn die beschichtungsfreie Zone durch den zweiten Sammelleiterabschnitt in zwei zumindest annähernd gleich große Zonenteile unterteilt wird, wobei der zweite Sammelleiterabschnitt zwischen zwei vierten Sammelleiterabschnitten angeordnet ist. Zudem kann es von Vorteil sein, wenn in jedem Zonenteil mindestens ein Heizelement angeordnet ist, um eine möglichst effektive Heizung des die beschichtungsfreie Zone enthaltenden Flächenbereichs der Scheibe zu bewirken.

Bei einer weiteren vorteilhaften Ausgestaltung der erfindungsgemäßen transparenten Scheibe ist das Heizelement so ausgebildet, dass durch Anlegen der Speisespannung der Flächenbereich der Scheibe, der den ersten Sammelleiterabschnitt enthält, mitheizbar ist. Durch diese Maßnahme kann auch der relative kalte Flächenbereich des ersten Sammelleiterabschnitts geheizt werden, so dass die Heizleistung der Scheibe insgesamt verbessert ist.

Bei einer weiteren vorteilhaften Ausgestaltung der erfindungsgemäßen transparenten Scheibe besteht das Heizelement aus einem selben Material wie die Sammelleiter, wobei es insbesondere aus einer metallischen Druckpaste, insbesondere Siebdruckpaste, hergestellt sein kann.

Bei einer weiteren vorteilhaften Ausgestaltung der erfindungsgemäßen transparenten Scheibe ist diese als Verbundscheibe ausgebildet. Die Verbundscheibe umfasst eine starre oder flexible Innen- und Außenscheibe, die durch zumindest eine thermoplastische Klebeschicht miteinander verbunden sind. Es versteht sich, dass die beiden Einzelscheiben nicht zwangsläufig aus Glas bestehen müssen, sondern dass diese auch aus einem nicht-gläsernen Material, beispielsweise Kunststoff, bestehen können.

Vorteilhaft ist die erfindungsgemäße transparente Scheibe als Fahrzeug-Windschutzscheibe ausgeführt, wobei sich das Heizelement im Bereich einer Ruhe- oder Parkstellung von zum Wischen der Scheibe vorgesehenen Scheibenwischern befindet. Durch die Möglichkeit die Scheibe im Bereich der beschichtungsfreien Zone zu heizen und einen hieran angrezenden Flächenbereich mit einem Sammelleiter mitzuheizen, kann ein Festfrieren der Scheibenwischer in Ruhe- oder Parkstellung in vorteilhafter Weise besonders effektiv verhindert werden.

Die Erfindung erstreckt sich weiterhin auf ein Verfahren zum Herstellen einer transparenten Scheibe mit einer elektrisch heizbaren, transparenten Beschichtung, das die folgenden Schritte umfasst:
- Herstellen einer mit einer heizbaren Beschichtung versehenen Scheibe, beispielsweise durch Aufbringen der Beschichtung auf einen Rohling, aus dem dann die Scheibe geformt wird, oder durch Aufbringen der Beschichtung auf eine vorgeformte Scheibe;
- Ausbilden zumindest einer beschichtungsfreien Zone, durch welche die heizbare Beschichtung in zumindest eine erste Beschichtungszone und eine zweite Beschichtungszone (galvanisch) unterteilt wird;
- Herstellen zumindest zweier Sammelleiter, die so mit den beiden Beschichtungszonen elektrisch verbunden sind, dass nach Anlegen einer Speisespannung jeweils ein elektrischer Strom über mindestens ein von der ersten Beschichtungszone gebildetes erstes Heizfeld und zumindest ein von der zweiten Beschichtungszone gebildetes zweites Heizfeld fließt;
- Herstellen mindestens eines Heizelements in der beschichtungsfreien Zone, durch welches ein die beschichtungsfreie Zone enthaltender Flächenbereich der Scheibe heizbar ist und wobei das mindestens eine Heizelement so ausgebildet wird, dass durch Anlegen der Speisespannung an das Heizelement die Scheibe in zumindest einem der beschichtungsfreien Zone angrenzenden Flächenbereich, der zumindest einen der Sammelleiter enthält, mitheizbar ist.

Die beschichtungsfreie Zone kann beispielsweise durch Maskieren vor Aufbringen der heizbaren Beschichtung hergestellt werden. Alternativ kann die beschichtungsfreie Zone durch mechanischen Abtrag nach Aufbringen der heizbaren Beschichtung hergestellt werden.

Von Vorteil kann es sein, wenn das Heizelement aus dem gleichen Material wie die Sammelleiter besteht und gemeinsam mit diesen gebildet wird. Dabei können das Heizelement und die Sammelleiter beispielsweise durch Druck, insbesondere Siebdruck, hergestellt werden. Lediglich der Vollständigkeit halber sei erwähnt, dass es alternativ auch möglich wäre, das Heizelement aus einem Metalldraht und/oder einer Metallfolie herzustellen.

### Kurze Beschreibung der Zeichnungen

Die Erfindung wird nun anhand von Ausführungsbeispielen näher erläutert, wobei Bezug auf die beigefügten Figuren genommen wird. Es zeigen in vereinfachter, nicht maßstäblicher Darstellung:
- Fig. 1: in einer schematischen Ansicht ein Ausführungsbeispiel der erfindungsgemäßen Scheibe in deren Ausgestaltung als Windschutzscheibe eines Kraftfahrzeugs;
- Fig. 1A: in einer schematischen Ansicht den Aufbau der Windschutzscheibe von Fig. 1;
- Fig. 2: ein vergrößertes Detail der Windschutzscheibe von Fig. 1;
- Fig. 3A-3B: verschiedene perspektivische Ansichten zur Veranschaulichung eines beispielhaften Herstellungsverfahrens der Windschutzscheibe von Fig. 1;
- Fig. 4: ein Flussdiagram des in Verbindung mit den Figuren 3A-3B beschriebenen Verfahrens.

### Ausführliche Beschreibung der Zeichnungen

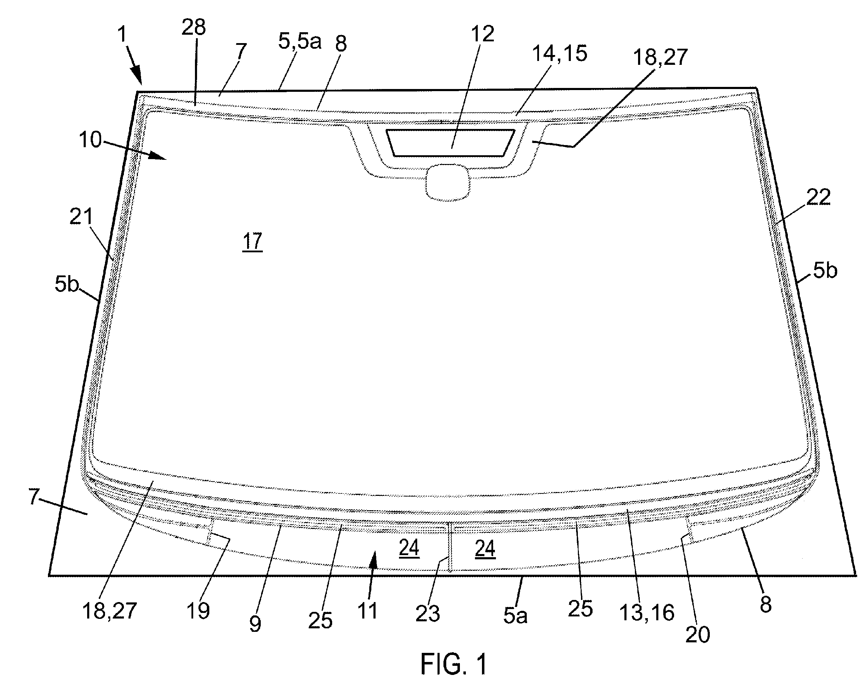

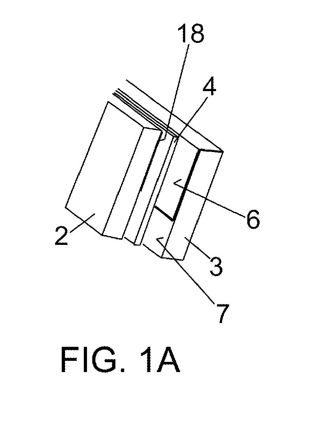

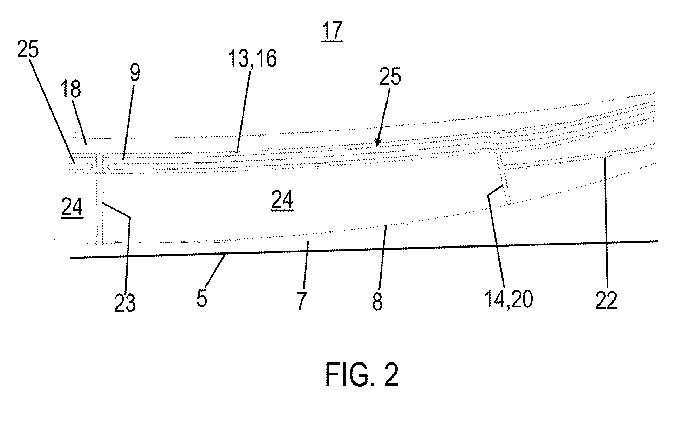

In den Figuren 1, 1A und 2 ist als Ausführungsbeispiel der Erfindung eine insgesamt mit der Bezugszahl 1 bezeichnete Fahrzeug-Windschutzscheibe veranschaulicht, deren Darstellung einer typischen Einbaulage im Kraftfahrzeug entspricht. Die Windschutzscheibe 1 ist als Verbundscheibe ausgebildet, deren Aufbau in Fig. 1A näher gezeigt ist. Demnach umfasst die Windschutzscheibe 1 eine auf der Außenseite angeordnete, starre Außenscheibe 2 und eine auf der Innenseite angeordnete, starre Innenscheibe 3, die beide als Einzelscheiben ausgebildet und über eine thermoplastische Klebeschicht 4, hier beispielsweise eine Polyvinylbutyralfolie (PVB), Ethylen-Vinyl-Acetat-Folie (EVA) oder Polyurethanfolie (PU) miteinander verbunden sind. Die beiden Einzelscheiben sind annähernd von gleicher Größe (die Innenscheibe ist etwas kleiner), haben eine trapezförmig geschwungene Kontur und sind beispielsweise aus Glas gefertigt, wobei sie gleichermaßen aber auch aus einem nichtgläsernen Material wie Kunststoff hergestellt sein können. Für eine andere Anwendung wie als Windschutzscheibe ist es auch möglich, die beiden Einzelscheiben aus einem flexiblen Material herzustellen.

Die Kontur der Außen- und Innenscheibe 2, 3 ergibt sich durch einen gemeinsamen Außenrand 5, im Weiteren als Scheibenrand bezeichnet. Entsprechend der Trapezform verfügen die beiden Einzelscheiben 2, 3 jeweils über zwei gegenüberliegende lange Seiten, die in Einbaulage dem oberen und unteren Scheibenrand 5a entsprechen, und zwei gegenüberliegende kurze Seiten, die in Einbaulage dem linken und rechten Scheibenrand 5b entsprechen.

Auf der mit der Klebeschicht 4 verbundenen Seite der Innenscheibe 3 ist eine transparente, für eine elektrische Beheizung der Windschutzscheibe 1 dienende Heizbeschichtung 6 abgeschieden. Die Heizbeschichtung 6 ist im Wesentlichen vollflächig auf die Innenscheibe 3 aufgebracht, wobei ein allseitig umlaufender Randbereich 7 der Innenscheibe 3 nicht beschichtet und ein Außenrand 8 der Heizbeschichtung 6, im Weiteren als Heizschichtrand 8 bezeichnet, gegenüber dem Scheibenrand 5 nach innen rückversetzt ist. Diese Maßnahme dient einer elektrischen Isolierung der Heizbeschichtung 6 nach außen. Zudem wird die Heizbeschichtung 6 gegen vom Scheibenrand 5 vordringende Korrosion geschützt.

Die Heizbeschichtung 6 ist durch einen heizschichtfreien Querstreifen 9 galvanisch unterteilt. Der Querstreifen 9 ist nahe dem unteren Scheibenrand 5a angeordnet und erstreckt sich im Wesentlichen parallel hierzu bis zum heizschichtfreien Randbereich 7 am linken und rechten Scheibenrand 5b. Die Heizbeschichtung 6 setzt sich somit aus einer ersten, in Einbaulage oberen Heizbeschichtungszone 10 und einer zweiten, in Einbaulage unteren Heizbeschichtungszone 11 zusammen, die galvanisch voneinander getrennt sind. Der Randbereich 7 und der Querstreifen 9 können jeweils durch nachträgliches Entfernen (Entschichten) der Heizbeschichtung 6 oder durch Maskieren der Innenscheibe 3 im Bereich der zu formenden Rand- und Querstreifen vor dem Abscheiden der Heizbeschichtung 6 hergestellt werden.

Ferner ist die Windschutzscheibe 1 mit einem heizschichtfreien Kommunikationsfenster 12 zur Datenübermittlung versehen, welches dem Fachmann an sich bekannt ist.

Das Kommunikationsfenster 12 ist für das Verständnis der Erfindung ohne Belang, so dass hier nicht näher darauf eingegangen werden muss.

Die transparente Heizbeschichtung 6 umfasst in an sich bekannter Weise eine Schichtenfolge mit mindestens einer elektrisch leitfähigen metallischen Teilschicht, vorzugsweise Silber (Ag), und gegebenenfalls weiteren Teilschichten wie Entspiegelungs- und Blockerschichten. Vorteilhaft ist die Schichtenfolge thermisch hoch belastbar, so dass sie die zum Biegen von Glasscheiben erforderlichen hohen Temperaturen von typischer Weise mehr als 600°C ohne Schädigung übersteht, wobei aber auch thermisch gering belastbare Schichtenfolgen vorgesehen sein können. Anstatt direkt auf die Innenscheibe 3 aufgebracht zu sein, könnte sie beispielsweise auch auf eine Kunststofffolie aufgebracht werden, die anschließend mit der Außen- und Innenscheibe 2, 3 verklebt wird. Die Heizbeschichtung 6 wird beispielsweise durch Sputtern (Magnetron-Kathodenzerstäubung) aufgebracht. Der Flächenwiderstand der Heizbeschichtung 6 kann beispielsweise bis zu einigen Ohm/Flächeneinheit betragen, wobei der Flächenwiderstand typischer Weise im Bereich von 0,5 bis 6 Ohm/Flächeneinheit liegt.

Die beiden Heizschichtzonen 10, 11 sind mit einem gemeinsamen ersten Sammelleiter 13 und einem gemeinsamen zweiten Sammelleiter 14 elektrisch verbunden. Der erste Sammelleiter 13 ist zur Verbindung mit dem einen Pol, beispielsweise Minuspol, der zweite Sammelleiter 14 zur Verbindung mit dem anderen Pol, beispielsweise Pluspol, einer (nicht gezeigten) Spannungsquelle vorgesehen. Die beiden Sammelleiter 13, 14 können hinsichtlich ihrer Funktion zumindest gedanklich in verschiedene Abschnitte unterteilt werden. So verfügt der zweite Sammelleiter 14 über einen entlang des langen oberen Scheibenrands 5a sich erstreckenden oberen Querabschnitt 15 (in der Beschreibungseinleitung als zweiter Sammelleiterabschnitt bezeichnet) und der erste Sammelleiter 13 über einen entlang des langen unteren Scheibenrands 5a sich erstreckenden unteren Querabschnitt 16 (in der Beschreibungseinleitung als erster Sammelleiterabschnitt bezeichnet), die zumindest annähernd einen parallelen Verlauf haben. Die beiden Querabschnitte 15, 16 sind jeweils auf die obere Heizbeschichtungszone 10 aufgebracht und stehen in direktem elektrischen Kontakt mit dieser. Dabei grenzt der obere Querabschnitt 15 an den oberen Randbereich 7, der untere Querabschnitt 16 an den Querstreifen 9 an. Durch die beiden Querabschnitte 15, 16 wird ein erstes Heizfeld 17 innerhalb der oberen Heizbeschichtungszone 10 zum Beheizen eines Sichtfelds der Windschutzscheibe 1 eingeschlossen bzw. begrenzt. Das erste Heizfeld 17 deckt insbesondere das zentrale Sichtfeld der Windschutzscheibe 1 ab, so dass dort eine Vereisung zuverlässig und sicher verhindert werden kann.

Wie insbesondere Fig. 1A entnommen werden kann, ist die Außenscheibe 2 mit einer opaken Farbschicht 18 versehen, die auf der an der Klebeschicht 4 anliegenden Seite aufgebracht ist. Die Farbschicht 18 setzt sich aus einem beispielsweise als Punktraster ausgebildeten, rahmenförmig umlaufenden Punktrasterbereich 27, an den sich außenseitlich ein voll bedruckter Volldruckbereich anschließt, zusammen. Die Farbschicht 18 besteht vorzugsweise aus einem elektrisch nicht-leitenden, schwarz eingefärbten Material, das in die Außenscheibe 2 eingebrannt werden kann. Sie verhindert einerseits die Sicht auf einen Klebestrang (nicht gezeigt), mit dem die Windschutzscheibe 1 in die Fahrzeugkarosserie eingeklebt wird, andererseits dient sie als UV-Schutz für das verwendete Klebematerial. Die Farbschicht 18 überdeckt insbesondere die beiden Querabschnitte 15, 16 und das Kommunikationsfenster 12. Der rahmenförmig umlaufende Punktrasterbereich 27 umgrenzt das Sichtfeld der Windschutzscheibe 1, wobei das Sichtfeld und das erste Heizfeld 15 im Wesentlichen deckungsgleich sind.

Der zweite Sammelleiter 14 verfügt ferner über einen zumindest annähernd senkrecht, im Ausführungsbeispiel leicht schräg zum unteren Querabschnitt 16 sich erstreckenden linken Längsabschnitt 19 (in der Beschreibungseinleitung als vierter Sammelleiterabschnitt bezeichnet) und einen entsprechend angeordneten rechten Längsabschnitt 20 (in der Beschreibungseinleitung ebenso als vierter Sammelleiterabschnitt bezeichnet), die zumindest annähernd einen parallelen Verlauf haben. Die beiden Längsabschnitte 19, 20 sind jeweils auf die untere Heizschichtzone 11 aufgebracht und stehen in direktem elektrischen Kontakt mit dieser. Sie erstrecken sich zum unteren Querabschnitt 16 hin und schließen in etwa bündig mit dem oberen bzw. unteren Rand der unteren Heizschichtzone 11 ab, so dass sie keinen elektrischen Kontakt zum unteren Querabschnitt 16 haben. Bezüglich der beiden kurzen Ränder 5b der Windschutzscheibe 1 sind die Längsabschnitte 19, 20 nach innen versetzt.

Der linke Längsabschnitt 19 ist über einen linken Übergangsabschnitt 21 mit dem oberen Querabschnitt 15 des zweiten Sammelleiters 14 elektrisch verbunden. In entsprechender Weise ist der rechte Längsabschnitt 20 über einen rechten Übergangsabschnitt 22 mit dem oberen Querabschnitt 15 des zweiten Sammelleiters 14 elektrisch verbunden. Die beiden Übergangsabschnitte 21, 22 verlaufen überwiegend im Randbereich 17, so dass ein elektrischer Kurzschluss zwischen beiden Heizbeschichtungszonen 10, 11 vermieden wird.

Der erste Sammelleiter 13 verfügt ferner über einen mittleren Längsabschnitt 23 (in der Beschreibungseinleitung als dritter Sammelleiterabschnitt bezeichnet), der sich ausgehend vom unteren Querabschnitt 16 zumindest annähernd senkrecht zu diesem erstreckt. Der mittlere Längsabschnitt 23 erstreckt sich durch den Querstreifen 9 hindurch in die untere Heizbeschichtungszone 11 hinein, wo er in etwa bündig mit dem unteren Längsrand der unteren Heizbeschichtungszone 11 abschließt. Dabei unterteilt der mittlere Längsabschnitt 23 den Querstreifen 9 in zwei Streifenabschnitte 26. Der mittlere Längsabschnitt 23 befindet sich in etwa mittig zwischen den linken und rechten Längsabschnitten 19, 20 und hat zumindest annähernd einen parallelen Verlauf zu diesen. Er ist auf der unteren Heizbeschichtungszone 11 aufgebracht und steht mit dieser in direktem elektrischem Kontakt. Einerseits durch den linken Längsabschnitt 19 und den mittleren Längsabschnitt 23 und andererseits durch den rechten Längsabschnitt 20 und den mittleren Längsabschnitt 23 werden jeweils zwei zweite Heizfelder 24 innerhalb der unteren Heizschichtzone 11 insbesondere zum Beheizen einer opaken Ruhe- und Parkstellung von Scheibenwischern (nicht gezeigt) zum Wischen des Sichtfelds der Windschutzscheibe 1 eingeschlossen bzw. begrenzt. Die beiden zweiten Heizfelder 24 sind durch den heizschichtfreien Querstreifen 9 vom ersten Heizfeld 17 galvanisch getrennt. Die drei Längsabschnitte 19, 20 23 und die beiden Übergangsabschnitte 21, 22 sind durch die opake Farbschicht 18 überdeckt.

Innerhalb des heizbeschichtungsfreien Querstreifens 9 ist auf beiden Seiten des mittleren Längsabschnitts 23 bzw. in den beiden Streifenabschnitten 26 jeweils ein separates Heizelement 25 (Ohm'scher Heizleiter) angeordnet. Jedes der beiden Heizelemente 25 hat einen mäandrisch geschwungenen Verlauf und erstreckt sich ausgehend vom gleichseitigen Übergangsabschnitt 21, 22 des zweiten Sammelleiters 14 zum mittleren Längsabschnitt 23, macht eine erste Kehrwende, erstreckt sich zum Übergangsabschnitt 21, 22, macht eine zweite Kehrtwende und erstreckt sich zum mittleren Längsabschnitt 23, wo es in den unteren Querabschnitt 16 des ersten Sammelleiters 13 einstrahlt. Die beiden Heizelemente 25 sind somit jeweils sowohl mit dem ersten Sammelleiter 13 als auch mit dem zweiten Sammelleiter 14 direkt elektrisch verbunden. Gleichermaßen wäre es auch möglich, dass die beiden Heizelemente 25 einen anderen, beispielsweise zick-zack-förmigen Verlauf haben, wobei es lediglich darauf ankommt, dass die beiden Heizelemente 25 den Bereich der beiden Streifenabschnitte 26 zumindest annähernd vollständig abdecken.
Die beiden Sammelleiter 13, 14 und die beiden Heizelemente 25 bestehen hier beispielsweise aus einem gleichen Material. Sie können beispielsweise durch Aufdrucken einer leitfähigen Paste, insbesondere im Siebdruckverfahren hergestellt werden, welche beispielsweise beim Biegen der Windschutzscheibe 1 eingebrannt wird. Sie können beispielsweise als streifen- bzw. bandförmige Elektroden ausgeführt sein. Alternativ können sie auch aus dünnen, schmalen Metallfolienstreifen aus beispielsweise Kupfer oder Aluminium bestehen, die insbesondere auf der Klebeschicht 4 fixiert und beim Verbinden der Außen- und Innenscheibe 2, 3 mit elektrischem Kontakt auf die Heizbeschichtung 6 aufgelegt werden. Durch die Einwirkung von Wärme und Druck beim Verbinden der Einzelscheiben kann ein elektrischer Kontakt gewährleistet werden.

Durch Anlegen einer Speisespannung an die beiden Sammelleiter 13, 14 können somit gleichzeitig das erste Heizfeld 17 und die beiden zweiten Heizfelder 24 beheizt werden. Zudem werden dadurch die beiden Heizelemente 25 mit der Speisespannung versorgt, wodurch die Windschutzscheibe 1 in einem den heizschichtfreien Querstreifen 9 enthaltenden Bereich geheizt wird. Aufgrund im Vergleich zur Heizbeschichtung 6 vernachlässigbarer ohmscher Widerstände heizen sich die Sammelleiter 13, 14 dabei praktisch nicht auf und leisten keinen nennenswerten Beitrag zur Heizleistung. Im Unterschied hierzu ist der elektrische Widerstand der beiden Heizelemente 25 wesentlich größer als jener der Sammelleiter 13, 14, um eine entsprechende Heizleistung zu bewirken. Zu diesem Zweck können die Heizelemente 25 jeweils eine senkrecht zu Ihrer Erstreckung sich bemessende Breite im Bereich von beispielsweise 0,3 bis 2 mm, insbesondere im Bereich von 0,5 bis 1 mm haben, während die Sammelleiter 13, 14 bei gleicher Schichtdicke und zumindest annähernd vergleichbarer Länge eine Breite im Bereich von beispielsweise 16 bis 20 mm haben. Dabei wird der das erste Heizfeld 17 begrenzende untere Querabschnitt 16 des ersten Sammelleiters 13 durch die beiden Heizelemente 25 mitgeheizt, so dass auch in einem den unteren Querabschnitt 16 enthaltenden Flächenbereich der Windschutzscheibe 1 eine Vereisung zuverlässig und sicher verhindert oder beseitigt werden kann. Insbesondere kann verhindert werden, dass die Scheibenwischer über einen den unteren Querabschnitt 16 enthaltenden vereisten Flächenbereich der Windschutzscheibe 1 streichen müssen. Vorteilhaft haben die beiden Heizelemente 25 eine solche Ausgestaltung, dass in dem den unteren Querabschnitt 16 enthaltenden Flächenbereich der Windschutzscheibe 1 durch Beheizen der beiden Heizelemente 25 eine spezifische Heizleistung erreicht werden kann, die zumindest der spezifischen Heizleistung des ersten Heizfelds 17 entspricht. Beispielsweise kann das erste Heizfeld 17 so ausgebildet sein, dass bei Beaufschlagung mit einer Bordspannung von 12 bis 24 Volt eine spezifische Heizleistung von 3 bis 4 Watt/dm² erreicht wird, wohingegen durch die beiden Heizelemente 25 jeweils eine um ca. 30% höhere spezifische Heizleistung im Bereich des entschichteten Querstreifens 9 erreicht wird. Im Hinblick auf die Vermeidung von thermischen Spannungen kann es von Vorteil sein, wenn die spezifische Heizleistung im entschichteten Querstreifen 9 maximal 8 Watt/dm² beträgt. Vorteilhaft beträgt ein Abstand zwischen den beiden Heizelementen 25 und dem unteren Querabschnitt 16 maximal 1 Millimeter, so dass ein besonders effektives Mitheizen des den unteren Querabschnitt 16 enthaltenden Flächenbereichs erreicht werden kann.

Lediglich der Vollständigkeit halber sei erwähnt, dass es gleichermaßen auch möglich wäre, die Heizelemente 25 aus einem von den Sammelleitern 13, 14 verschiedenen Material zu formen.

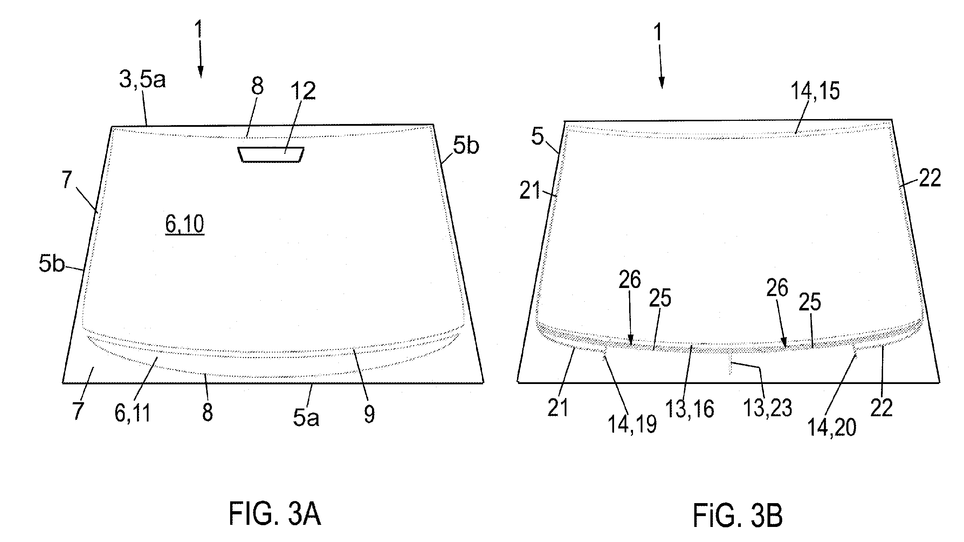

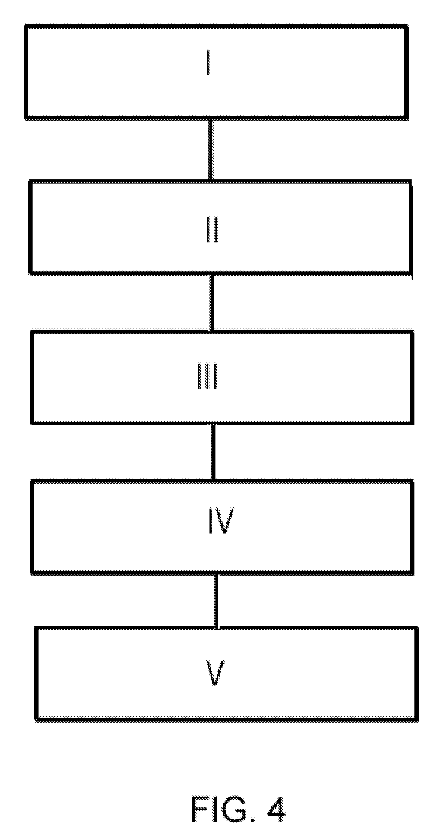

Unter Bezugnahme auf Fig. 3A-3B und Fig. 4 wird ein beispielhaftes Verfahren zur Herstellung der Windschutzscheibe 1 beschrieben.

Zunächst werden die Außen- und Innenscheibe 2, 3 mit der gewünschten trapezförmigen Kontur aus einem Glasrohling geschnitten und anschließend wird die Innenscheibe 2 mit der Heizbeschichtung 6 durch Sputtern beschichtet, wobei der Randbereich 7 durch Maskieren nicht beschichtet wird (Schritt I). Alternativ wäre es auch möglich, dass zunächst ein Rohling beschichtet wird, aus dem dann die Innenscheibe geschnitten wird. Die auf diese Weise vorbehandelte Innenscheibe 2 wird dann zur Formung des Querstreifens 9 und des Kommunikationsfensters 12 entschichtet, was in der industriellen Serienfertigung beispielsweise mittels eines mechanisch abtragenden Schleifrads erfolgen kann. Alternativ kann auch der Randbereich 7 durch Entschichten hergestellt werden (Schritt II). In Fig. 3A sind die heizbeschichtungsfreien Bereiche der Innenscheibe 3 dargestellt. Insbesondere sind die durch den Querstreifen 9 getrennten Heizbeschichtungszonen 10, 11 erkennbar. Der Querstreifen 9 kann eine quer zu seiner Erstreckung sich bemessende Breite im Bereich von beispielsweise 10 bis 20 mm aufweisen.

Wie in Fig. 3B gezeigt ist, werden anschließend durch Drucken, beispielsweise Siebdrucken mit einer Druckpaste, beispielsweise Silberdruckpaste, die beiden Sammelleiter 13, 14 und die beiden Heizelemente 25 auf die Innenscheibe 3 aufgedruckt (Schritt III). Hierdurch werden die beiden Querabschnitte 15, 16 bzw. bus bars des ersten Heizfelds 17 und die drei Längsabschnitte 19, 20, 23 bzw. bus bars der beiden zweiten Heizfelder 24 geformt. Im heizbeschichtungsfreien Querstreifen 9 befinden sich die beiden Heizelemente 25.

Dann wird die Druckpaste voreingebrannt, gefolgt von einem Biegen der Scheiben 2, 3 bei hoher Temperatur, einem Aufkleben und Verlöten der Außenanschlüsse (nicht gezeigt), sowie einem Zusammenlegen der Innen- und Außenscheibe 3, 2 und verkleben mittels der Klebeschicht 4 (Schritt IV).

Die Erfindung stellt eine transparente Scheibe mit elektrisch heizbarer Beschichtung zur Verfügung, bei der die Beschichtung zur Formung zumindest zweier voneinander getrennter Heizfelder durch zumindest eine heizbeschichtungsfreie Zone galvanisch unterteilt ist, wobei ein die heizbeschichtungsfreie Zone enthaltender Flächenbereich der Scheibe durch zumindest ein Heizelement heizbar ist. Zudem kann ein hieran angrenzender Flächenbereich der Scheibe, der über eine heizbare Beschichtung, jedoch einen nicht nennenswert zur Heizleistung beitragenden Sammelleiter enthält und nicht zu einem Heizfeld gehört, durch das Heizelement mitgeheizt werden. Durch diese Maßnahme können die Enteisungseigenschaften der Scheibe insbesondere in einem Flächenbereich einer Park- bzw. Ruhestellung von Scheibenwischern einer Windschutzscheibe erheblich verbessert werden.

### Bezugszeichenliste

- 1: Verbundscheibe
- 2: Außenscheibe
- 3: Innenscheibe
- 4: Klebeschicht
- 5: Scheibenrand
- 5a: langer Scheibenrand
- 5b: kurzer Scheibenrand
- 6: Heizbeschichtung
- 7: Randbereich
- 8: Heizschichtrand
- 9: Querstreifen
- 10: obere Heizbeschichtungszone
- 11: untere Heizbeschichtungszone
- 12: Kommunikationsfenster
- 13: erster Sammelleiter
- 14: zweiter Sammelleiter
- 15: oberer Querabschnitt
- 16: unterer Querabschnitt
- 17: erstes Heizfeld
- 18: Farbschicht
- 19: linker Längsabschnitt
- 20: rechter Längsabschnitt
- 21: linker Übergangsabschnitt
- 22: rechter Übergangsabschnitt
- 23: mittlerer Längsabschnitt
- 24: zweites Heizfeld
- 25: Heizelement
- 26: Streifenabschnitt
- 27: Punktrasterbereich
- 28: Volldruckbereich

## Patentansprüche

1. Transparente Scheibe (1) mit einer elektrisch heizbaren, transparenten Beschichtung (6), die sich zumindest über einen Teil der Scheibenfläche, insbesondere über deren Sichtfeld erstreckt, wobei die heizbare Beschichtung (6) durch mindestens eine beschichtungsfreie Zone (9) in mindestens eine erste Beschichtungszone (10) und eine zweite Beschichtungszone (11) unterteilt ist, wobei die beiden Beschichtungszonen (10, 11) jeweils mit mindestens zwei Sammelleitern (13, 14) elektrisch so verbunden sind, dass nach Anlegen einer Speisespannung, die von einer Spannungsquelle bereitgestellt wird, jeweils ein Strom über mindestens ein von der ersten Beschichtungszone (10) gebildetes erstes Heizfeld (17) und mindestens ein von der zweiten Beschichtungszone (11) gebildetes zweites Heizfeld (24) fließt, wobei in der beschichtungsfreie Zone (9) mindestens ein Heizelement (25) angeordnet ist, das einen solchen ohmschen Widerstand hat, dass durch Anlegen der Speisespannung an das Heizelement (25) die Scheibe in einem die beschichtungsfreie Zone (9) enthaltenden Flächenbereich heizbar ist, und wobei das mindestens eine Heizelement (25) so ausgebildet ist, dass durch Anlegen der Speisespannung an das Heizelement (25) die Scheibe in zumindest einem der beschichtungsfreien Zone (9) angrenzenden Flächenbereich, der zumindest einen der Sammelleiter (13, 14) enthält, mitheizbar ist, wobei die spezifische Heizleistung des Heizelements (25) größer ist als die spezifische Heizleistung des Heizfelds (17, 24) mit dessen Beschichtungszone (10, 11) der im Flächenbereich enthaltene Sammelleiter (13, 14) elektrisch verbunden ist.

2. Transparente Scheibe (1) nach Anspruch 1, bei welcher das Heizelement (25) mit mindestens zwei der Sammelleiter (13, 14), die für eine elektrische Verbindung mit verschiedenen Polen der Spannungsquelle vorgesehen sind, elektrisch verbunden ist.

3. Transparente Scheibe (1) nach einem der Ansprüche 1 oder 2, bei welcher mindestens ein Sammelleiter (15, 19, 20) der ersten Beschichtungszone (10) und mindestens ein Sammelleiter (16, 23) der zweiten Beschichtungszone (11), welche für eine Verbindung mit einem selben Pol der Spannungsquelle vorgesehen sind, elektrisch miteinander verbunden sind.

4. Transparente Scheibe (1) nach Anspruch 3, bei welcher ein zur Verbindung mit dem einen Pol vorgesehener erster Sammelleiter (13) einen mit der ersten Beschichtungszone verbundenen ersten Sammelleiterabschnitt (16) und zumindest einen mit der zweiten Beschichtungszone verbundenen zweiten Sammelleiterabschnitt (23) umfasst, wobei sich der zweite Sammelleiterabschnitt (23) ausgehend vom ersten Sammelleiterabschnitt (16) zumindest schräg, insbesondere senkrecht, zum ersten Sammelleiterabschnitt (16) erstreckt, wobei ein zur Verbindung mit dem anderen Pol vorgesehener zweiter Sammelleiter (14) einen mit der ersten Beschichtungszone (10) verbundenen dritten Sammelleiterabschnitt (15) und zumindest einen mit der zweiten Beschichtungszone (11) verbundenen vierten Sammelleiterabschnitt (20, 21) umfasst, der sich zum ersten Sammelleiterabschnitt (16) hin erstreckt, ohne mit diesem elektrisch verbunden zu sein.

5. Transparente Scheibe (1) nach Anspruch 4, bei welcher die beschichtungsfreie Zone (9) durch den zweiten Sammelleiterabschnitt (23) in zwei zumindest annähernd gleich große Zonenteile (26) unterteilt wird, wobei der zweite Sammelleiterabschnitt (23) zwischen zwei vierten Sammelleiterabschnitten (20, 21) angeordnet ist.

6. Transparente Scheibe (1) nach Anspruch 5, bei welcher in jedem Zonenteil (26) mindestens ein Heizelement (25) angeordnet ist.

7. Transparente Scheibe nach einem der Ansprüche 4 bis 6, bei welcher das zumindest eine Heizelement (25) so ausgebildet ist, dass durch Anlegen der Speisespannung der Flächenbereich der Scheibe, der den ersten Sammelleiterabschnitt (16) enthält, mitheizbar ist.

8. Transparente Scheibe (1) nach einem der Ansprüche 1 bis 7, bei welcher das Heizelement (25) aus einem selben Material wie die Sammelleiter (13, 14) besteht, wobei das Heizelement (25) eine senkrecht zu dessen Erstreckung bemessende Breite im Bereich von 0,3 bis 2mm aufweist, wobei die Sammelleiter (13, 14) bei gleicher Schichtdicke und zumindest annähernd vergleichbarer Länge eine Breite im Bereich von 16 bis 20 mm haben.

9. Transparente Scheibe (1) nach einem der Ansprüche 1 bis 8, bei welcher das Heizelement (25) aus einer metallischen Druckpaste hergestellt ist.

10. Transparente Scheibe (1) nach einem der Ansprüche 1 bis 9, welche als Verbundscheibe ausgebildet ist.

11. Transparente Scheibe (1) nach einem der Ansprüche 1 bis 10, welche als Fahrzeug-Windschutzscheibe ausgeführt ist, wobei sich das zumindest eine Heizelement (25) im Bereich einer Ruhe- oder Parkstellung von zum Wischen der Scheibe vorgesehenen Scheibenwischern befindet.

12. Verfahren zum Herstellen einer transparenten Scheibe (1) mit den folgenden Schritten:
- Herstellen einer mit einer elektrisch heizbaren, transparenten Beschichtung (6) versehenen Scheibe (1);
- Formen zumindest einer beschichtungsfreien Zone (9) in der Beschichtung (6), durch welche die heizbare Beschichtung (6) in zumindest eine erste Beschichtungszone (10) und eine zweite Beschichtungszone (11) unterteilt wird;
- Herstellen zumindest zweier Sammelleiter (13, 14), die so mit den beiden Beschichtungszonen (10, 11) elektrisch verbunden sind, dass nach Anlegen einer Speisespannung jeweils ein Strom über mindestens ein von der ersten Beschichtungszone (10) gebildetes erstes Heizfeld (17) und zumindest ein von der zweiten Beschichtungszone (11) gebildetes zweites Heizfeld (24) fließt,
- Herstellen mindestens eines Heizelements (25) in der beschichtungsfreien Zone (9), durch welches ein die beschichtungsfreie Zone (9) enthaltender Flächenbereich der Scheibe (1) heizbar ist wobei das mindestens eine Heizelement (25) so ausgebildet wird, dass durch Anlegen der Speisespannung an das Heizelement (25) die Scheibe in zumindest einem der beschichtungsfreien Zone (9) angrenzenden Flächenbereich, der zumindest einen der Sammelleiter (13) enthält, mitheizbar ist, wobei die spezifische Heizleistung des Heizelements (25) größer ist als die spezifische Heizleistung des Heizfelds (17) mit dessen Beschichtungszone (10) der im Flächenbereich enthaltende Sammelleiter (13) elektrisch verbunden ist.

13. Verfahren nach Anspruch 12, bei welchem die beschichtungsfreie Zone (9) durch mechanischen Abtrag entschichtet wird.

14. Verfahren nach Anspruch 12 oder 13, bei welchem das zumindest eine Heizelement (25) aus dem gleichen Material wie die Sammelleiter (13, 14) besteht und gemeinsam mit diesen gebildet wird, wobei das Heizelement (25) eine senkrecht zu dessen Erstreckung bemessende Breite im Bereich von 0,3 bis 2mm aufweist, wobei die Sammelleiter (13, 14) bei gleicher Schichtdicke und zumindest annähernd vergleichbarer Länge eine Breite im Bereich von 16 bis 20 mm haben.

15. Verfahren nach Anspruch 14, bei welchem das zumindest eine Heizelement (25) und die Sammelleiter (13, 14) durch Drucken, insbesondere Siebdrucken, hergestellt werden.

## Claims

1. Transparent pane (1) with an electrically heatable, transparent coating (6), which extends over at least a part of the pane surface, in particular over its visual field, wherein the heatable coating (6) is divided by at least one coating-free zone (9) into at least one first coating zone (10) and a second coating zone (11), wherein the two coating zones (10, 11) are in each case electrically connected to at least two collecting conductors (13, 14) such that after application of a supply voltage that is provided by a voltage source, in each case a current flows over at least one first heating field (17) formed by the first coating zone (10) and at least one second heating field (24) formed by the second coating zone (11), wherein in the coating-free zone (9) at least one heating element (25) is disposed that has an ohmic resistance such that by means of application of the supply voltage to the heating element (25), the pane is heatable in a surface area containing the coating-free zone (9), and wherein the at least one heating element (25) is configured such that by means of application of the supply voltage to the heating element (25), the pane is also heatable in at least one surface area adjacent the coating-free zone (9), which surface area contains at least one of the collecting conductors (13, 14), wherein the specific heating output of the heating element (25) is greater than the specific heating output of the heating field (17, 24) to whose coating zone (10, 11) the collecting conductor (13, 14) contained in the surface area is electrically connected.

2. Transparent pane (1) according to claim 1, wherein the heating element (25) is electrically connected to at least two of the collecting conductors (13, 14), which are provided for an electrical connection to different poles of the voltage source.

3. Transparent pane (1) according to one of claims 1 or 2, wherein at least one collecting conductor (15, 19, 20) of the first coating zone (10) and at least one collecting conductor (16, 23) of the second coating zone (11), which are provided for a connection to one and the same pole of the voltage source, are electrically connected to each other.

4. Transparent pane (1) according to claim 3, wherein a first collecting conductor (13) provided for connection to one pole comprises a first collecting conductor section (16) connected to the first coating zone and at least one second collecting conductor section (23) connected to the second coating zone, wherein the second collecting conductor section (23) extends starting from the first collecting conductor section (16) at least at an angle, in particular perpendicular, to the first collecting conductor section (16), wherein a second collecting conductor (14) provided for connection to the other pole comprises a third collecting conductor section (15) connected to the first coating zone (10) and at least one fourth collecting conductor section (20, 21) connected to the second coating zone (11), which extends to the first collecting conductor section (16) without being electrically connected thereto.

5. Transparent pane (1) according to claim 4, wherein the coating-free zone (9) is divided by the second collecting conductor section (23) into two at least approximately same sized zone parts (26), wherein the second collecting conductor section (23) is disposed between two fourth collecting conductor sections (20, 21).

6. Transparent pane (1) according to claim 5, wherein at least one heating element (25) is disposed in each zone part (26).

7. Transparent pane according to one of claims 4 through 6, wherein the at least one heating element (25) is configured such that by means of application of the supply voltage, the surface area of the pane, which contains the first collecting conductor section (16), is also heatable.

8. Transparent pane (1) according to one of claims 1 through 7, wherein the heating element (25) is made from one and the same material as the collecting conductor (13, 14), wherein the heating element (25) has a width perpendicular to its length measuring in the range from 0.3 to 2 mm, wherein the collecting conductors (13, 14) with the same layer thickness and at least approximately comparable length, have a width in the range from 16 to 20 mm.

9. Transparent pane (1) according to one of claims 1 through 8, wherein the heating element (25) is produced from a metallic printing paste.

10. Transparent pane (1) according to one of claims 1 through 9, that is configured as a composite pane.

11. Transparent pane (1) according to one of claims 1 through 10, that is implemented as a vehicle windshield, wherein the at least one heating element (25) is situated in the region of a resting or parked position of windshield wipers provided to wipe the pane.

12. Method for producing a transparent pane (1) having the following steps:
- producing a pane (1) provided with an electrically heatable, transparent coating (6);
- forming at least one coating-free zone (9) in the coating (6), by which the heatable coating (6) is divided into at least one first coating zone (10) and one second coating zone (11);
- producing at least two collecting conductors (13, 14), which are electrically connected to the two coating zones (10, 11) such that after application of a supply voltage, in each case a current flows over at least one first heating field (17) formed by the first coating zone (10) and at least one second heating field (24) formed by the second coating zone (11),
- producing at least one heating element (25) in the coating-free zone (9), by means of which a surface area of the pane (1) containing the the coating-free zone (9) is heatable, wherein the at least one heating element (25) is configured such that by means of application of the supply voltage to the heating element (25), the pane is also heatable in at least one surface area adjacent the coating-free zone (9) which surface area contains at least one of the collecting conductors (13), wherein the specific heating output of the heating element (25) is greater than the specific heating output of the heating field (17) to whose coating zone (10) the collecting conductor (13) contained in the surface area is electrically connected.

13. Method according to claim 12, wherein the coating-free zone (9) is stripped by mechanical ablation.

14. Method according to claim 12 or 13, wherein the at least one heating element (25) is made from the same material as the collecting conductors (13, 14) and formed together therewith, wherein the heating element (25) has a width perpendicular to its length measuring in the range from 0.3 to 2 mm, wherein the collecting conductors (13, 14) with the same layer thickness and at least approximately comparable length, have a width in the range from 16 to 20 mm.

15. Method according to claim 14, wherein the at least one heating element (25) and the collecting conductors (13, 14) are produced by printing, in particular by screenprinting.

## Revendications

1. Vitre transparente (1) avec un revêtement transparent pouvant être chauffé électriquement (6), qui s'étend le long d'au moins une partie de la surface de la vitre, en particulier de son champ de vision, où le revêtement pouvant être chauffé électriquement (6) est subdivisé par au moins une zone dépourvue de revêtement (9) en au moins une première zone de revêtement (10) et une deuxième zone de revêtement (11), où les deux zones de revêtement (10, 11) sont respectivement reliées électriquement avec au moins deux conducteurs collectifs (13, 14), de telle manière qu'après l'application d'une tension d'alimentation fournie par une source de tension, un courant circule respectivement par au moins une première zone chauffante (17) formée par la première zone de revêtement (10) et au moins une deuxième zone chauffante (24) formée par la deuxième zone de revêtement (11), où au moins un élément chauffant (25) est disposé dans la zone dépourvue de revêtement (9) qui a une résistance ohmique, telle que par l'application de la tension d'alimentation à l'élément chauffant (25), la vitre peut être chauffée dans au moins une région de la surface contenant la zone dépourvue de revêtement (9), et où ledit au moins un élément chauffant (25) est conçu de telle manière qu'en appliquant la tension d'alimentation à l'élément chauffant (25) la vitre peut être chauffée en même temps dans au moins une région de la surface avoisinant la zone dépourvue de revêtement (9), qui contient au moins l'un desdits conducteurs collectifs (13, 14), où la puissance spécifique de chauffage de la zone chauffante (25) est supérieure à la puissance spécifique de chauffage de la zone chauffante (17, 24) avec la zone de revêtement (10, 11) de laquelle le conducteur collectif (13, 14) contenu dans la région de la surface est reliée électriquement.

2. Vitre transparente (1) selon la revendication 1, où l'élément chauffant (25) est relié électriquement avec au moins deux des conducteurs collectifs (13, 14), qui sont prévus pour un branchement électrique avec divers pôles de la source de tension.

3. Vitre transparente (1) selon au moins l'une des revendications 1 ou 2, où au moins un conducteur collectif (15, 19, 20) de la première zone de revêtement (10) et au moins un conducteur collectif (16, 23) de la deuxième zone de revêtement (11), qui sont prévus pour se connecter à un même pôle de la source de tension sont électriquement reliés entre eux.

4. Vitre transparente (1) selon la revendication 3, où un premier conducteur collectif (13), prévu pour la connexion avec un premier pôle comprend une première section de conducteur collectif (16) associée à la première zone de revêtement et au moins une deuxième section de conducteur collectif (23) associée à la deuxième zone de revêtement, où la deuxième section de conducteur collectif (23) s'étend à partir de la première section de conducteur collectif (16) au moins obliquement, en particulier verticalement à la première section de conducteur collectif (16), où un deuxième conducteur collectif (14) prévu pour la connexion à l'autre pôle comprend une troisième section de conducteur collectif (15) associée à la première zone de revêtement (10) et au moins une quatrième section de conducteur collectif (20, 21) associée à la deuxième zone de revêtement (11), qui s'étend vers la première section de conducteur collectif (16), sans être connectée électriquement avec celle-ci.

5. Vitre transparente (1) selon la revendication 4, où la zone dépourvu de revêtement (9) est subdivisée par la deuxième section de conducteur collectif (23) en deux parties de zone (26) au moins approximativement égales, où la deuxième section de conducteur collectif (23) est disposée entre deux quatrièmes sections de conducteur collectif (20, 21).

6. Vitre transparente (1) selon la revendication 5, où dans chaque partie de zone (26) au moins un élément chauffant (25) est disposé.

7. Vitre transparente selon l'une des revendications 4 à 6, où ledit au moins un élément chauffant (25) est disposé de telle manière que par l'application de la tension d'alimentation, la région de la surface de la vitre qui contient la première section de conducteur collectif (16), peut-être chauffé.

8. Vitre transparente (1) selon l'une des revendications 1 à 7, où l'élément chauffant (25) est composé d'un même matériau que les conducteurs collectifs (13, 14), où l'élément chauffant (25) présente une largeur mesurée perpendiculaire à son extension de l'ordre de 0,3 à 2 mm, où les conducteurs collectifs (13, 14) à la même épaisseur de couche et à une longueur au moins approximativement comparable ont une largeur de l'ordre de 16 à 20 mm.

9. Vitre transparente (1) selon l'une des revendications 1 à 8, où l'élément chauffant (25), est faite à partir d'une pâte d'impression métallique.

10. Vitre transparente (1) après une des revendications 1 à 9, qui est formée comme vitre stratifiée.

11. Vitre transparente (1), selon l'une des revendications 1 à 10, qui est exécutée comme pare-brise de véhicule, où ledit au moins un élément chauffant (25) est situé dans la région d'une position de repos ou de stationnement des essuie-glaces destinés à essuyer la vitre.

12. Procédé pour la fabrication d'une vitre transparente (1) en suivant les étapes suivantes :
- fabrication d'une vitre (1) pourvue d'un revêtement transparent et pouvant être chauffée électriquement (6) ;
- formation d'au moins une zone dépourvue de revêtement (9) dans le revêtement (6), à travers de laquelle le revêtement pouvant être chauffé (6), est subdivisé en au moins une première zone de revêtement (10) et une deuxième zone de revêtement (11) ;
- fabrication d'au moins deux conducteurs collectifs (13, 14), qui sont reliés électriquement avec les deux zones de revêtement (10, 11) de telle manière qu'après l'application d'une tension respectivement un courant passe par au moins une première zone chauffante (17) formé par la première zone de revêtement (10) et au moins une deuxième zone chauffante (24) formée par la deuxième zone de revêtement (11),
- fabrication d'au moins un élément chauffant (25) dans la zone dépourvue de revêtement (9), par lequel une région de la surface (1) contenant la zone dépourvue de revêtement (9) peut être chauffée, où ledit au moins un élément chauffant (25) est configuré de telle manière que par l'application de la tension d'alimentation à l'élément chauffant (25), la vitre peut être chauffée dans au moins une région de la surface adjacente à la zone dépourvue de revêtement (9) qui contient au moins l'un des connecteurs collectifs (13), où la puissance de chauffage spécifique de l'élément chauffant (25) est supérieure à la capacité de chauffage spécifique de la zone chauffante (17) avec la zone de revêtement (10) de laquelle le conducteur collectif (13) est relié électriquement.

13. Procédé selon la revendication 12 où dans la zone dépourvue de revêtement (9) le revêtement est enlevé par enlèvement mécanique.

14. Procédé selon la revendication 12 ou 13, où ledit au moins un élément chauffant (25) est composé de la même matière que les conducteurs collectifs (13, 14), et est formé ensemble avec ceux-ci, où l'élément chauffant (25) présente une largeur mesurée perpendiculaire à son extension de l'ordre de 0,3 à 2 mm, où les conducteurs collectifs (13, 14) à la même épaisseur de couche et à une longueur au moins approximativement comparable ont une largeur de l'ordre de 16 à 20 mm.

15. Procédé selon la revendication 14, où l'au moins un élément chauffant (25) et les conducteurs collectifs (13, 14) sont produits par l'impression, en particulier, par sérigraphie.
